# EUROPEAN PATENT APPLICATION

(11) **EP 4 404 636 A1**
(43) Date of publication of application: **24.07.2024**
(21) Application number: 22869260.4
(22) Date of filing: 14.09.2022
(51) Int. Cl.: H04W 52/02, H04W 76/28

(54) **TRANSMISSION METHOD AND APPARATUS UNDER DISCONTINUOUS RECEPTION**

(30) Priority: 15.09.2021 CN 202111081585
(71) Applicant: Vivo Mobile Communication Co., Ltd., Dongguan, Guangdong 523863 (CN)
(72) Inventor: YANG, Yuming, Dongguan, Guangdong 523863 (CN); JI, Zichao, Dongguan, Guangdong 523863 (CN); LIU, Siqi, Dongguan, Guangdong 523863 (CN); PENG, Shuyan, Dongguan, Guangdong 523863 (CN)
(74) Representative: Lavoix
(86) International application number: PCT/CN2022/118722
(87) International publication number: WO 2023/040891

(57) **Abstract**

This application discloses a discontinuous reception-based transmission method and apparatus, and pertains to the field of wireless communication technologies. The discontinuous reception-based transmission method in embodiments of this application includes: determining, by a terminal, a sensing and/or measurement behavior in a discontinuous reception DRX inactive state according to a resource allocation scheme, where the resource allocation scheme includes a partial sensing mode, a full sensing mode, and/or random selection.

## Description

### CROSS-REFERENCE TO RELATED APPLICATIONS

This application claims priority to Chinese Patent Application No. 202111081585.0, filed in China on September 15, 2021, which is incorporated herein by reference in its entirety.

### TECHNICAL FIELD

This application pertains to the field of wireless communication technologies, and specifically relates to a discontinuous reception-based transmission method and apparatus.

### BACKGROUND

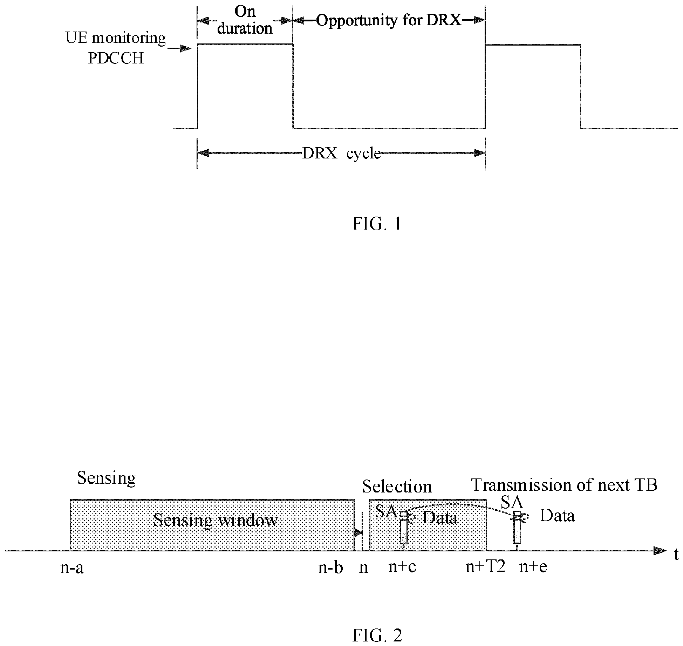

A discontinuous reception (Discontinuous Reception, DRX) mechanism is introduced into both long term evolution (Long Term Evolution, LTE) and new radio (New Radio, NR), and DRX on (DRX on) and DRX off (DRX off) durations are set to implement power saving for user equipments (User Equipment, UE, also referred to as terminal). As shown in FIG. 1, an on duration (on duration) is interval period of DRX on. In the case of no scheduling, after the on duration elapses, the UE will enter an off duration of one DRX cycle, that is, opportunity for DRX (Opportunity for DRX).

In LTE sidelink (sidelink, SL), resource selection needs to be performed through sensing (Sensing). Referring to FIG. 2, the basic working principle is as follows: measurement is performed in a sensing window (sensing window), and scheduling assignment (scheduling assignment, SA) and interference measurement are performed in each sensing transmission time interval (Transmission Time Interval, TTI). The UE performs resource selection by performing the following steps:
(a) Exclude resources used for sending data by UE.
(b) Demodulate a received SA to obtain resources reserved for other UEs, so as to exclude the resources reserved for other UEs.
(c) Perform power sensing within the sensing window to obtain through measurement a reference signal strength indication (reference signal strength indication, RSSI), and then exclude resources with large interference based on a measurement result.
(d) Randomly select one subframe (subframe) from 20% resources with least interference within a selection window, so as to implement periodic resource reservation.

In NR sidelink, sensing-based resource selection is supported in resource allocation mode 2 (Mode 2), which is specifically in the following manner: (1) The transmit end (TX) UE determines a resource selection window after resource selection is triggered. (2) Before resource selection, the UE needs to determine a candidate resource set (candidate resource set) for resource selection by comparing a reference signal received power (Reference Signal Received Power, RSRP) measured on resources in a resource selection window against a corresponding RSRP threshold (threshold) and then adding the resources into the candidate resource set if the RSRP is lower than the RSRP threshold. (3) After the resource set is determined, the UE randomly selects a transmission resource from the candidate resource set. In addition, the UE may reserve a transmission resource for a next transmission during a current transmission.

The DRX mechanism is introduced into NR sidelink to achieve the purpose of power saving, and the terminal needs to perform sensing (sensing) or measurement in a DRX inactive state to guarantee reliability of service transmission. However, if the terminal is allowed to perform sensing or measurement in a DRX inactive state as in a DRX active state, without limiting the sensing (sensing) or measurement behavior, the effect of power saving in DRX may be weakened, failing to achieve the purpose of introducing the DRX mechanism. Therefore, it is necessary to study the sensing or measurement behavior in the DRX inactive state, so as to achieve the purpose of power saving while guaranteeing service reliability.

### SUMMARY

Embodiments of this application provide a discontinuous reception-based transmission method and apparatus, so as to resolve the problem that existing solutions do not specify a sensing or measurement behavior in a DRX inactive state, making it difficult to achieve the purpose of power saving while guaranteeing service reliability.

According to a first aspect, a discontinuous reception-based transmission method is provided, including:
determining, by a terminal, a sensing and/or measurement behavior in a DRX inactive state according to a resource allocation scheme, where the resource allocation scheme includes a partial sensing mode, a full sensing mode, and/or random selection.

According to a second aspect, a discontinuous reception-based transmission apparatus is provided, including:
a determining module, configured to determine a sensing and/or measurement behavior in a DRX inactive state according to a resource allocation scheme, where the resource allocation scheme includes a partial sensing mode, a full sensing mode, and/or random selection.

According to a third aspect, a terminal is provided, where the terminal includes a processor, a memory, and a program or instructions stored in the memory and capable of running on the processor, and when the program or the instructions are executed by the processor, the steps of the discontinuous reception-based transmission method according to the first aspect are implemented.

According to a fourth aspect, a terminal is provided, including a processor and a communication interface, where the processor is configured to determine a sensing and/or measurement behavior in a DRX inactive state according to a resource allocation scheme, where the resource allocation scheme includes a partial sensing mode, a full sensing mode, and/or random selection.

According to a fifth aspect, a readable storage medium is provided, where a program or instructions are stored in the readable storage medium, and when the program or the instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the method according to the first aspect.

According to a seventh aspect, a computer program/program product is provided, where the computer program/program product is stored in a non-volatile storage medium, and the program/program product is executed by at least one processor to implement the steps of the method according to the first aspect.

According to an eighth aspect, a communication device is configured to perform the steps of the transmission method according to the first aspect.

In the embodiments of this application, a specific sensing (sensing) or measurement behavior of the terminal in the inactive state is clarified, so that the terminal performs sensing or measurement in the DRX inactive state to achieve the purpose of power saving while guaranteeing service reliability.

### BRIEF DESCRIPTION OF DRAWINGS

FIG. 1 is a schematic diagram of a DRX cycle;
FIG. 2 is a schematic diagram of resource selection through sensing in LTE sidelink;
FIG. 3 is a block diagram of a wireless communication system to which the embodiments of this application are applicable;
FIG. 4 is a schematic diagram of performing partial sensing mode by a terminal;
FIG. 5 is a schematic diagram of an SL resource preemption manner in NR SL;
FIG. 6 is a schematic flowchart of a discontinuous reception-based transmission method according to an embodiment of this application;
FIG. 7 is a schematic diagram of a partial sensing mode according to embodiment 1 of this application;
FIG. 8 is a schematic diagram of a partial sensing mode according to embodiment 2 of this application;
FIG. 9 is a schematic diagram of a partial sensing mode according to embodiment 3 of this application;
FIG. 10 and FIG. 11 are schematic diagrams of a partial sensing mode according to embodiment 4 of this application;
FIG. 12 is a schematic structural diagram of a discontinuous reception-based transmission apparatus according to an embodiment of this application;
FIG. 13 is a schematic structural diagram of a terminal according to an embodiment of this application; and
FIG. 14 is a schematic structural diagram of hardware of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Some related technical terms of this application are first briefly described as follows.

### 1. DRX

During DRX configuration, parameters such as onDurationTimer (DRX onduration timer), drx-InactivityTimer (DRX inactivity timer), drx-RetransmissionTimer (DRX retransmission timer), or longDRX-CycleStartOffset may be configured.

After DRX is configured for the UE, if decoding of transmitted or received data fails, the UE needs to enter an active time to monitor a control channel and wait for retransmission scheduled by the network.

During the On Duration, if the UE is scheduled in a slot (slot) and receives data, it is likely to continue to be scheduled in next several slots. Therefore, the timer drx-InactivityTimer (DRX inactivity timer) is started or restarted whenever the UE is scheduled to perform initial data transmission, and the UE remains in an active state until the timer expires.

For downlink data reception, after receiving downlink data transmission indicated by a physical downlink control channel (Physical Downlink Control channel, PDCCH) and feeding back the hybrid automatic repeat request (Hybrid automatic repeat request, HARQ) information, the UE starts a downlink round trip time timer (HARQ RTT (Round Trip Time) Timer) for a corresponding HARQ process. If the HARQ RTT timer expires and data of the HARQ process is not successfully decoded, the UE starts a retransmission timer (drx-RetransmissionTimer), monitors the PDCCH, and waits for transmission.

For uplink data transmission, after receiving uplink data transmission that is indicated by the PDCCH, the UE starts an uplink round trip time timer HARQ RTT Timer for the corresponding HARQ process. After the HARQ RTT timer expires, the UE starts a retransmission timer (drx-ULRetransmissionTimer), enters the active state to monitor the PDCCH, and waits for transmission scheduled by the network.

### 2. Partial sensing (Partial sensing) in LTE SL

Partial sensing in LTE V2X is mainly designed for power saving to support pedestrian UE to vehicle UE (Pedestrian UE to Vehicle UE, P2V) communication. UEs support resource selection of two modes. One is random resource selection; and the other is first performing partial sensing and then performing resource selection based on a partial sensing result, implementing semi-persistent resource reservation. Which mode to be selected by the UE is configured by using radio resource control (Radio Resource Control, RRC), and when RRC configuration indicates supporting two resource selection modes, the UE determines one resource selection manner to be used.

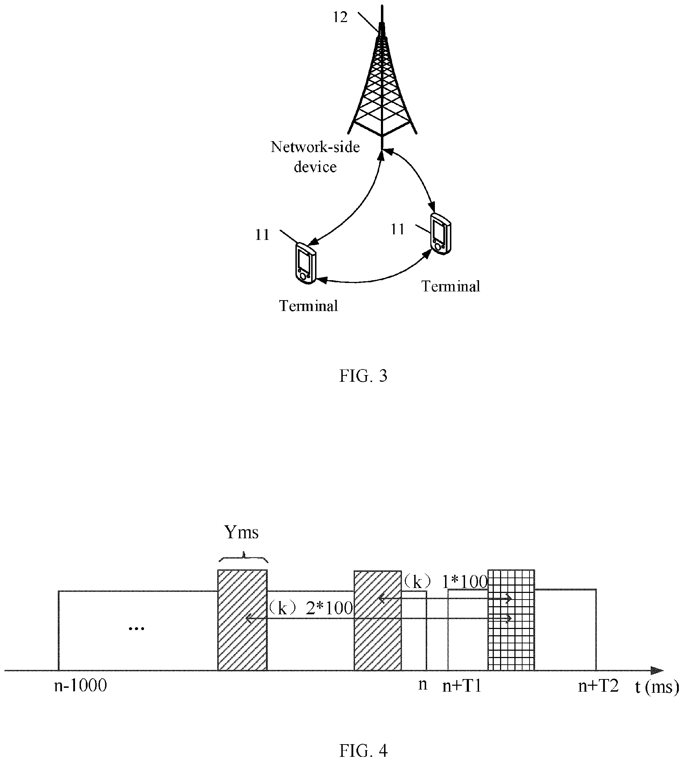

Specifically, referring to FIG. 4, the terminal performs partial sensing and performs resource sensing in the following manner:

A sensing window for the UE is a window of a slashed portion in a range of [n-1000, n], with a length of Y and k being a parameter configured by using RRC. The value of k may be in a range of {1,2,3,...,10}. A lattice window within [n+T1, n+T2] is a selection window of the UE configured by the higher layer. The UE performs sensing on sidelink control information (Sidelink Control Information, SCI) sent by other terminals in a slashed sensing window, and based on detected SCI and a reserved period, a resource reservation status for other terminals within the lattice window is speculated, and the UE may exclude, based on such information, a resource not satisfying a condition in the selection window. At least 20% of the remaining resources (20% of the window length Y) are used as the candidate resource set, and are reported to the media access control (Media Access Control, MAC) layer. The MAC layer randomly selects a resource from the candidate resource set as a candidate resource of the UE. The UE performs periodic reservation for the selected resource, and the reservation period is indicated in SCI.

### 3. Random selection in sidelink (Random selection in SL)

If the user performs random selection, a resource is selected randomly within the selection window, with no need to perform sensing.

In Rel-16 NR SL, the TX UE performs resource reservation (reservation includes periodic reservation and aperiodic reservation) for its allocated resources, and the reserved resource is to be used for later physical sidelink control channel (Physical Sidelink Control Channel, PSCCH)/physical sidelink shared channel (Physical Sidelink Shared Channel, PSSCH) transmission. Aperiodic reservation may be implemented through a time resource assignment (Time resource assignment) field in SCI, and the reserved resource can be at least used for transmission of one TB. The periodic reservation may be implemented through a resource reservation period (Resource reservation period) field in the SCI, and the periodic resources reserved in a current period may be used for transmission of a next TB.

### 4. SL resource pre-emption in NR SL (Resource pre-emption in NR SL)

In resource allocation mode 2, a resource pre-emption (pre-emption) mechanism is supported, and the mechanism is briefly described as follows. One resource reserved or selected by the UE overlaps (or partially overlaps) with a resources reserved or selected by another UE with a higher-priority service, and if an SL-RSRP measurement value on a related resource is greater than a specific associated SL-RSRP threshold, the UE triggers resource reselection. The service priority and the SL-RSRP threshold are determined based on TB transmission on the resource.

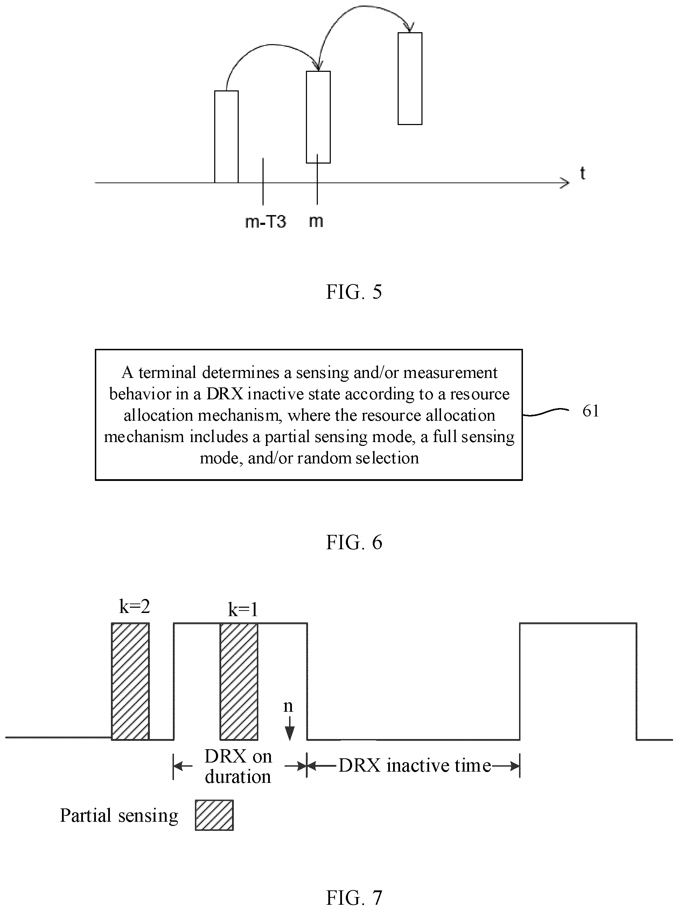

As shown in FIG. 5, to determine whether a resource (PSCCH or PSSCH resource) reserved or selected has been preempted, the UE performs re-evaluation for resource selection at least at a moment 'm-T3', where a moment 'm' is a moment in which the resource is located or a moment in which resource reservation information is sent, and T3 includes at least a duration for resource selection processing by the UE.

The following describes in detail a discontinuous reception-based transmission method and apparatus provided in the embodiments of this application by using some embodiments and application scenarios thereof with reference to the accompanying drawings.

It should be noted that in this application, sensing (Sensing) may refer to receiving a physical sidelink control channel (Physical Sidelink Control Channel, PSCCH), sidelink control information (Sidelink Control Information, SCI), and the like.

Partial sensing may include at least one of the following: periodic-based partial sensing (Periodic-Based Partial Sensing, PBPS) and contiguous partial sensing (Contiguous Partial Sensing, CPS).

In this application, a time unit may be expressed as symbol, slot, subframe, frame, millisecond, second, the number of times, and the like.

Referring to FIG. 6, FIG. 6 is a schematic flowchart of a discontinuous reception-based transmission method according to an embodiment of this application. The method includes the following step.

Step 61: A terminal determines a sensing and/or measurement behavior in a DRX inactive state according to a resource allocation scheme, where the resource allocation scheme includes a partial sensing mode, a full sensing mode, and/or random selection.

In this embodiment of this application, a specific sensing (sensing) and/or measurement behavior of the terminal in the inactive state is clarified, so that the terminal performs sensing or measurement in the DRX inactive state to achieve the purpose of power saving while guaranteeing service reliability.

It should be noted that a specific sensing and/or measurement behavior in an active state for the terminal is further included in this embodiment of this application.
(1) In some embodiments of this application, optionally, the partial sensing mode includes a first sensing mode, the first sensing mode being periodic-based partial sensing mode (which is also referred to as noncontiguous sensing mode) and the determining, by a terminal, a sensing and/or measurement behavior in a DRX inactive state according to a resource allocation scheme includes:
   determining, by the terminal, the number and/or positions of sensing occasions for the first sensing mode based on configuration information, where the configuration information includes first configuration information and/or second configuration information, the first configuration information is configuration information for the number and/or positions of sensing occasions for the first sensing mode in a case with DRX not configured, and the second configuration information is configuration information for the number and/or positions of sensing occasions for the first sensing mode in a case with DRX configured; and
   performing, by the terminal, sensing and/or measurement in the DRX inactive state based on the number and/or positions of sensing occasions for the first sensing mode.

That is, two sets of configuration information are configured for the terminal, one set is configuration of the number and/or positions of sensing occasions for the first sensing mode in a case with DRX not configured, and the other set is configuration of the number and/or positions of sensing occasions for the first sensing mode in a case with DRX configured.

In this embodiment of this application, optionally, the configuration information is predefined by a protocol, configured by a network, preconfigured by the network, indicated by the network, configured by the terminal, preconfigured by the terminal, or indicated by the terminal.

In this embodiment of this application, optionally, the number and/or positions of sensing occasions configured in the configuration information is the number and/or positions of sensing occasions in the DRX inactive state.

In this embodiment of this application, optionally, the number and/or positions of sensing occasions configured in the configuration information is determined from the 1st sensing occasion in the DRX inactive state.

In this embodiment of this application, optionally, the 1st sensing occasion is determined forward using a first moment as a reference point, the first moment is a resource selection trigger time, the P-th slot in candidate slots for resource selection, or a resource reporting time, and P is a positive integer greater than or equal to 1.

In this embodiment of this application, optionally, remaining sensing occasions other than the 1st sensing occasion configured in the configuration information include a sensing occasion in a DRX active state and a sensing occasion in the DRX inactive state.

In this embodiment of this application, optionally, the number and/or positions of sensing occasions configured in the configuration information are determined starting from a first moment used as a reference point, where the first moment is a resource selection trigger time, the P-th slot in candidate slots for resource selection, or a resource reporting time, P being a positive integer greater than or equal to 1.

In this embodiment of this application, optionally, the number and/or positions of sensing occasions configured in the configuration information are determined forward starting from the first moment.

In this embodiment of this application, optionally, the discontinuous reception-based transmission method further includes: the terminal performs sensing and/or measurement on a second sensing occasion, where the second sensing occasion is a sensing occasion in a DRX active state and prior to the sensing occasion configured in the configuration information. That is, sensing and/or measurement also needs to be performed on a sensing occasion between the configured sensing occasion and the first moment within an onduration time.

(2) In some other embodiments of this application, optionally, the determining, by a terminal, a sensing and/or measurement behavior in a DRX inactive state according to a resource allocation scheme includes:
determining, by the terminal based on configuration information, the number and/or positions of sensing occasions in a case with DRX configured, where the configuration information includes configuration information for the number and/or positions of sensing occasions; and
performing, by the terminal, sensing and/or measurement in the DRX inactive state based on the determined number and/or positions of sensing occasions in a case with DRX configured.

That is, in this embodiment of this application, only one set of configuration is configured for the terminal, and the method for interpreting the configuration information when the terminal is configured with DRX is different from the method for interpreting the configuration information when DRX is not configured.

In this embodiment of this application, optionally, the configuration information is predefined by the protocol, configured by the network, preconfigured by the network, indicated by the network, configured by the terminal, preconfigured by the terminal, or indicated by the terminal.

In this embodiment of this application, optionally, the number and/or positions of sensing occasions configured in the configuration information is the number and/or positions of sensing occasions in the DRX inactive state.

In this embodiment of this application, optionally, the number and/or positions of sensing occasions configured in the configuration information is determined from the 1st sensing occasion in the DRX inactive state.

In this embodiment of this application, optionally, the 1st sensing occasion is determined forward using a first moment as a reference point, the first moment is a resource selection trigger time, the P-th slot in candidate slots for resource selection, or a resource reporting time, and P is a positive integer greater than or equal to 1.

In this embodiment of this application, optionally, remaining sensing occasions other than the 1st sensing occasion configured in the configuration information include a sensing occasion in a DRX active state and a sensing occasion in the DRX inactive state.

In this embodiment of this application, optionally, the number and/or positions of sensing occasions configured in the configuration information are determined starting from a first moment used as a reference point, where the first moment is a resource selection trigger time, the P-th slot in candidate slots for resource selection, or a resource reporting time, P being a positive integer greater than or equal to 1.

In this embodiment of this application, optionally, the number and/or positions of sensing occasions configured in the configuration information are determined forward starting from the first moment.

In this embodiment of this application, optionally, the discontinuous reception-based transmission method further includes:
performing, by the terminal, sensing and/or measurement on a second sensing occasion, where the second sensing occasion is a sensing occasion in a DRX active state and prior to the sensing occasion configured in the configuration information.

(3) In this embodiment of this application, optionally, the partial sensing mode includes a first sensing mode, the first sensing mode being periodic-based partial sensing (PBPS) and the determining, by a terminal, a sensing and/or measurement behavior in a DRX inactive state according to a resource allocation scheme includes at least one of the following:
1) Performing sensing on N sensing occasions nearest to a first moment.

The so-called "nearest to the first moment" may be, for example, a sensing occasion corresponding to the smallest k value before the first moment in t _{*y* - *k***P*ᵣₑₛₑᵣᵥₑ} or the most recent sensing occasion, where Pᵣₑₛₑᵣᵥₑ is a sensing period for partial sensing, y is a candidate slot, and k is a sensing step.

In this case, the terminal performs sensing regardless of whether the N sensing occasions nearest to the first moment are in the inactive state; or the number and/or positions of sensing occasions is determined starting from the 1st sensing occasion in the inactive state, that is, the indicated N sensing occasions are determined not starting from a sensing occasion nearest to the first moment in the actual time domain, but are determined starting from the 1st sensing occasion nearest to the first moment in the inactive state. In this case, sensing and/or measurement is performed by default if a sensing occasion within the on duration is present before.

In this embodiment of this application, optionally, the first moment is a resource selection trigger time, the P-th slot in candidate slots for resource selection, or a resource reporting time, P is a positive integer greater than or equal to 1, and the number and/or positions of sensing occasions are determined forward from the first moment.

In this embodiment of this application, optionally, a value of N is predefined by the protocol, configured by the network, preconfigured by the network, indicated by the network, preconfigured by the terminal, configured by the terminal, or indicated by the terminal.

In this embodiment of this application, optionally, a value of N is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

That is, each of the foregoing first measurement quantities may be a first measurement quantity for a system, a carrier, a BWP, a resource pool, a user, or a connection group.

2) Performing sensing on N sensing occasions nearest to the first moment in the DRX inactive state.

In this case, when the network side correspondingly maintains another set of configuration under DRX or interpretation is differently made from a case with no DRX, sensing is always performed in a sensing occasion between the configured sensing occasion and the first moment within the onduration time, and therefore during calculation of the sensing occasion, only the sensing occasion in the DRX inactive state is calculated.

In this embodiment of this application, optionally, the first moment is a resource selection trigger time, the P-th slot in candidate slots for resource selection, or a resource reporting time, P is a positive integer greater than or equal to 1, and the number and/or positions of sensing occasions are determined forward from the first moment.

In this embodiment of this application, optionally, a value of N is predefined by the protocol, configured by the network, preconfigured by the network, indicated by the network, preconfigured by the terminal, configured by the terminal, or indicated by the terminal.

In this embodiment of this application, optionally, a value of N is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

(3) Performing sensing on only N sensing occasions nearest to the first moment in the DRX inactive state in each DRX cycle.

In this embodiment of this application, optionally, the first moment is a resource selection trigger time, the P-th slot in candidate slots for resource selection, or a resource reporting time, P is a positive integer greater than or equal to 1, and the number and/or positions of sensing occasions are determined forward from the first moment.

In this embodiment of this application, optionally, a value of N is predefined by the protocol, configured by the network, preconfigured by the network, indicated by the network, preconfigured by the terminal, configured by the terminal, or indicated by the terminal.

In this embodiment of this application, optionally, a value of N is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

(4) The number of sensing occasions of the terminal, communication link, or communication group satisfies a first criterion, the first criterion being less than a first threshold and/or greater than a second threshold.

At least one of the first threshold and the second threshold is predefined by the protocol, configured by the network, preconfigured by the network, indicated by the network, preconfigured by the terminal, configured by the terminal, or indicated by the terminal.

A value of at least one of the first threshold and the second threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

(5) The number of sensing time units of the terminal, communication link, or communication group satisfies a second criterion, the second criterion being less than a third threshold and/or greater than a fourth threshold.

At least one of the third threshold and the fourth threshold is predefined by the protocol, configured by the network, preconfigured by the network, indicated by the network, preconfigured by the terminal, configured by the terminal, or indicated by the terminal.

A value of at least one of the third threshold and the fourth threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

6) A ratio or difference between the number of sensing occasions in the DRX inactive state and the number of sensing occasions in a DRX active state for the terminal, communication link, or communication group satisfies a fifth threshold; or a ratio or difference between the number of sensing occasions in the DRX inactive state and the total number of sensing occasions in a DRX cycle satisfies a sixth threshold.

At least one of the fifth threshold and the sixth threshold is predefined by the protocol, configured by the network, preconfigured by the network, indicated by the network, preconfigured by the terminal, configured by the terminal, or indicated by the terminal.

A value of at least one of the fifth threshold and the sixth threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

7) A minimum interval between every two sensing occasions is greater than or equal to a seventh threshold, and/or a maximum interval is less than or equal to an eighth threshold.

In this embodiment of this application, with the minimum interval, it can be guaranteed that the terminal can enter a light sleep (light sleep) or deep sleep (deep sleep) state, thereby reducing energy consumption.

8) A minimum interval between every two sensing occasions in the DRX inactive state is greater than or equal to a seventh threshold, and/or a maximum interval is less than or equal to an eighth threshold.

In this embodiment of this application, the sensing occasion being in the inactive state includes at least one of the following:
1. the sensing occasion is considered to be in the inactive state only if there is an overlapping portion with that in the inactive state;
2. the sensing occasion is considered to be in the inactive state if the overlapping portion with that in the inactive state is greater than a preset threshold, or a proportion of the overlapping portion in the sensing occasion is greater than a preset threshold; and
3. the sensing occasion is considered to be in the inactive state if it is located entirely in the inactive state.

At least one of the seventh threshold and the eighth threshold is predefined by the protocol, configured by the network, preconfigured by the network, indicated by the network, preconfigured by the terminal, configured by the terminal, or indicated by the terminal.

A value of at least one of the seventh threshold and the eighth threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

In the foregoing embodiments, N is a positive integer greater than or equal to 1.

In this embodiment of this application, optionally, the partial sensing mode is a second sensing mode, the second sensing mode being a contiguous partial sensing (CPS) mode and the determining, by a terminal, a sensing and/or measurement behavior in a DRX inactive state according to a resource allocation scheme includes:

A sensing window or sensing duration of the second sensing mode is less than or equal to a ninth threshold, or the sensing window or sensing duration of the second sensing mode in the DRX inactive state is less than or equal to a tenth threshold.

In this embodiment of this application, there may be one or more sensing windows for the second sensing mode, and the sensing duration for the second sensing mode may be one or more times, that is, the number of sensing windows and the sensing duration may be cumulatively counted for one or more processes or one or more data packets.

In this embodiment of this application, optionally, at least one of the ninth threshold and the tenth threshold is predefined by the protocol, configured by the network, preconfigured by the network, indicated by the network, preconfigured by the terminal, configured by the terminal, or indicated by the terminal.

In this embodiment of this application, optionally, a value of at least one of the ninth threshold and the tenth threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

(4) In this embodiment of this application, optionally, the discontinuous reception-based transmission method further includes:
configuring a candidate resource set for a first data packet to be related to a candidate resource set for a second data packet, where the first data packet and the second data packet are packets of different processes, and the second data packet is a data packet of an existing process; and the configuring the candidate resource set for the first data packet includes at least one of the following:
1) Configuring the candidate resource set for the first data packet such that a sensing window corresponding to the first data packet (a sensing window of the PBPS) and a sensing window corresponding to the second data packet at least partially overlap or are spaced apart for less than a preset value, so as to reduce the total sensing duration or the number of times of RF (radio frequency) switching for the terminal, and to prevent the terminal from being unable to enter a deep sleep (deep sleep) or a more power-saving sleep state.
2) Configuring the first L slots in the candidate resource set for the first data packet such that a sensing window corresponding to the first data packet (a sensing window of the CPS) and a sensing window corresponding to the second data packet at least partially overlap or are spaced apart for less than a preset value, so as to reduce the total sensing duration or the number of times of RF (radio frequency) switching for the terminal, and to prevent the terminal from being unable to enter a deep sleep (deep sleep) or a more power-saving sleep state.

In this embodiment, the first data packet and second data packet may alternatively be HARQ processes, SL processes, transport blocks (TB), MAC PDUs, or the like.

(5) In this embodiment of this application, optionally, the discontinuous reception-based transmission method further includes:
triggering or switching, by the terminal, a resource selection or resource allocation scheme. It should be noted that switching of the resource allocation scheme in this application may refer to switching between different resource allocation schemes, such as switching between the full sensing mode and the partial sensing mode, or switching within a same resource allocation scheme, such as switching between the first sensing mode and the second sensing mode in the partial sensing mode.

In this embodiment of this application, optionally, the terminal triggers or switches the resource selection or resource allocation scheme in a case that at least one of the following conditions is satisfied:
at least one of sensing and/or measurement duration, sensing and/or measurement duration in the DRX inactive state, continuous sensing and/or measurement duration, continuous sensing and/or measurement duration in the DRX inactive state, the number of measurements, and the number of times of switching from a sleep state to a wake-up state reaches a preset threshold;
at least one of a battery level, a power level, a power saving mode, a DRX cycle, a DRX on duration, a DRX inactive state duration, a transmission period of data packet, and a first measurement quantity reaches a preset threshold, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections;
a transmission type of a service received by the terminal is broadcast or groupcast, because DRX on duration for the users is aligned at a high probability in this case and packets are sent only within the on duration; and
at least one of the number of pieces of control information received by the terminal in the DRX inactive state, the number of reserved resources, and a ratio of reserved resources is less than a preset threshold.

In this embodiment of this application, optionally, a value of the preset threshold is predefined by the protocol, configured by the network, preconfigured by the network, preconfigured by the terminal, configured by the terminal, or indicated by the terminal.

In this embodiment of this application, optionally, a value of the preset threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

In this embodiment of this application, optionally, the partial sensing mode includes a first sensing mode and a second sensing mode, the first sensing mode is periodic-based partial sensing, and the second sensing mode is continuous partial sensing; and the triggering or switching, by the terminal, a resource selection or resource allocation scheme includes at least one of the following:
switching, by the terminal, from the full sensing (full sensing) mode to the first sensing mode or from the first sensing mode to the full sensing mode;
switching, by the terminal, from the full sensing mode to the second sensing mode or from the second sensing mode to the full sensing mode;
switching, by the terminal, from the full sensing mode to the first sensing mode or the second sensing mode or from the first sensing mode or the second sensing mode to the full sensing mode;
switching, by the terminal, from the first sensing mode to the second sensing mode or from the second sensing mode to the first sensing mode;
switching, by the terminal, from the first sensing mode and the second sensing mode to the first sensing mode or to the second sensing mode;
switching, by the terminal, from the full sensing mode to random selection or from random selection to the full sensing mode; and
switching, by the terminal, from the first sensing mode and/or the second sensing mode to random selection or from random selection to the first sensing mode and/or the second sensing mode.

In this embodiment of this application, optionally, the partial sensing mode includes a first sensing mode and a second sensing mode, the first sensing mode is periodic-based partial sensing, and the second sensing mode is contiguous partial sensing; and the determining, by a terminal, a sensing and/or measurement behavior in a DRX inactive state according to a resource allocation scheme includes at least one of the following:
(1) skipping sensing and/or measurement in the DRX inactive state at the time of triggering or switching the resource selection or resource allocation scheme;
(2) performing sensing and/or measurement in the DRX inactive state at the time of triggering or switching the resource selection or resource allocation scheme;
(3) skipping sensing and/or measurement in the DRX inactive state after the resource selection or resource allocation scheme is triggered or switched; where
   for example, in a case of switching to a resource sensing or resource allocation scheme that requires less sensing, it is considered that the terminal requires more power saving and therefore sensing and/or measurement is not performed in the inactive state; and further, in a case of random selection, sensing and/or measurement is not performed in the inactive state;
(4) performing sensing and/or measurement in the DRX inactive state after the resource selection or resource allocation scheme is triggered or switched;
(5) performing, by the terminal, sensing and/or measurement in the DRX inactive state according to the resource allocation scheme; where
   for example, when the resource allocation scheme is random selection, sensing and/or measurement is not performed in the inactive state; if the resource allocation scheme is the first sensing mode in partial sensing, sensing and/or measurement is performed in the inactive state based on a sensing occasion in the inactive state for the configured first sensing mode; if the resource allocation scheme is the second sensing mode in partial sensing, sensing and/or measurement is performed in the inactive state based on a portion in the inactive state within a sensing window of the configured second sensing mode;
(6) performing sensing and/or measurement in the DRX inactive state upon triggering or switching to a full sensing mode or coexistence of the first sensing mode and the second sensing mode; where
   for example, if the terminal needs to use both the first sensing mode and the second sensing mode, or even requires full sensing, the data packet may be considered relatively important and therefore sensing and/or measurement needs to be performed in the inactive state;
(7) skipping sensing and/or measurement in the DRX inactive state after triggering or switching to the first sensing mode or the second sensing mode; where
   in this case, it is considered that the terminal requires only one sensing mode, which may impose higher energy consumption requirements, and therefore sensing and/or measurement is not performed in the inactive state; and
(8) performing sensing and/or measurement in the DRX inactive state after triggering or switching to the first sensing mode or the second sensing mode; where
   in this case, it is considered that a resource selection result of the terminal may be less reliable when the terminal switches to only one sensing mode, and thus sensing and/or measurement needs to be performed in the inactive state to guarantee transmission reliability.

In this embodiment of this application, optionally, the partial sensing mode includes a first sensing mode, the first sensing mode being periodic-based partial sensing; and the determining, by a terminal, a sensing and/or measurement behavior in a DRX inactive state according to a resource allocation scheme includes:
in a case that the terminal triggers the first sensing mode, performing, by the terminal, sensing and/or measurement within a corresponding sensing window. Further, when the terminal triggers the first sensing mode, the terminal can, should, or must perform sensing and/or measurement in the inactive state within the corresponding sensing window.

In this embodiment of this application, optionally, the partial sensing mode includes a second sensing mode, the second sensing mode being contiguous partial sensing and the determining, by a terminal, a sensing and/or measurement behavior in a DRX inactive state according to a resource allocation scheme includes:
in a case that the terminal triggers the second sensing mode, performing, by the terminal, sensing and/or measurement within a corresponding sensing window. Further, when the terminal triggers the second sensing mode, the terminal can, should, or must perform sensing and/or measurement in the inactive state within the corresponding sensing window.

In this embodiment of this application, optionally, the determining, by a terminal, a sensing and/or measurement behavior in a DRX inactive state according to a resource allocation scheme includes:
performing, by the terminal, sensing and/or measurement in a corresponding sensing slot during re-evaluation or preemption checking. Further, during re-evaluation or preemption checking by the terminal, the terminal can, should, or must perform sensing and/or measurement in the inactive state in the corresponding sensing slot.

In this embodiment of this application, optionally, the partial sensing mode includes a second sensing mode, the second sensing mode being contiguous partial sensing and the determining, by a terminal, a sensing and/or measurement behavior in a DRX inactive state according to a resource allocation scheme includes:
in a case that a sensing window is larger than a minimum sensing window of the second sensing mode, performing, by the terminal, sensing and/or measurement in M most recent slots within the sensing window, M being a size of the minimum sensing window in the second sensing mode, or M is equal to a first preset time minus a processing time, the processing time being an SCI processing time and/or a data packet preparation time. In this embodiment of this application, optionally, the first preset time may be 32 slots, and, certainly, may be any other values.

The minimum sensing window is predefined by the protocol, configured by the network, preconfigured by the network, indicated by the network, configured by the terminal, preconfigured by the terminal, or indicated by the terminal.

In this embodiment of this application, optionally, the determining, by a terminal, a sensing and/or measurement behavior in a DRX inactive state according to a resource allocation scheme further includes:
in a case that a minimum sensing window or a minimum candidate slot is indicated as predefined by the protocol, configured by the network, preconfigured by the network, indicated by the network, configured by the terminal, preconfigured by the terminal, or indicated by the terminal, performing, by the terminal, sensing and/or measurement in a corresponding sensing slot, where the sensing slot includes a sensing slot corresponding to a sensing mode triggered by a current packet and/or a sensing slot corresponding to a sensing mode triggered by an existing data packet. Further, the terminal can, should, or must perform sensing and/or measurement in the inactive state. In this case, the sensing slot corresponding to the sensing mode triggered by the existing data packet may be a sensing slot falling in a sensing slot within a sensing window or sensing occasion corresponding to the sensing mode triggered by the current packet, or may be the sensing slot corresponding to the sensing mode triggered by the existing data packet.

The following describes in detail a discontinuous reception-based transmission method provided in the embodiments of this application by using examples with reference to specific application scenarios.

### Implementation 1 of this application: sensing limitation 1 for partial sensing window

As shown in FIG. 7, when the resource allocation scheme of the terminal is partial sensing (Partial sensing) and the first sensing mode (PBPS) is used, a sensing window k may be limited to achieve the purpose of power saving, where k described herein indicates a position of a sensing occasion determined from a reference point n at a first moment.

For example, in a case that k=1 is indicated as predefined by the protocol, configured by the network, preconfigured by the network, indicated by the network, configured by the terminal, preconfigured by the terminal, or indicated by the terminal, or sensing is performed on a most recent (most recent) sensing occasion, when the most recent sensing occasion before the first moment is located in the DRX inactive state, sensing is performed on the most recent sensing occasion in the inactive state; otherwise, sensing is not performed in the inactive state. As shown in FIG. 7, in this case, because the most recent sensing occasion is in the active state, sensing is performed only in a window of k=1, and sensing is not performed in a window of k=2.

Also, for another example, as predefined by the protocol, configured by the network, preconfigured by the network, indicated by the network, configured by the terminal, preconfigured by the terminal, or indicated by the terminal, when the terminal is configured with DRX, sensing and/or measurement is performed based on parameter configuration for DRX, or configuration is interpreted in an interpretation manner for a case with DRX configured, assuming that only a sensing occasion in the inactive state is considered in this case. Therefore, when it is configured or indicated to perform sensing on a most recent sensing occasion before the first moment n, for example, it is indicated as j=1 (j being the number of sensing occasions in the inactive state that are nearest to the first moment), the sensing occasion of j=1 is actually a sensing occasion in the inactive state in FIG. 7, that is, k=2. Because there is still another sensing occasion of on duration between the sensing occasion and the first moment, the terminal may simultaneously perform sensing and/or measurement in the windows of k=1 and k=2.

Alternatively, as predefined by the protocol, configured by the network, preconfigured by the network, indicated by the network, configured by the terminal, preconfigured by the terminal, or indicated by the terminal, when the terminal is configured with DRX, sensing and/or measurement is performed based on parameter configuration for DRX, or configuration is interpreted in an interpretation manner for a case with DRX configured, assuming that the sensing occasion is determined from the 1st sensing occasion in the inactive state in this case. Therefore, when the most recent sensing occasion before the first moment is configured or indicated, for example, j=1 is indicated, and in this case, a sensing occasion of j=1 is actually the sensing occasion in the inactive state in FIG. 7, that is, k=2. Because there is another sensing occasion of on duration between this sensing occasion and the first moment in this case, the terminal may perform sensing and/or measurement in both the windows of k=1 and k=2.

### Implementation 2 of this application: sensing limitation 2 for partial sensing window

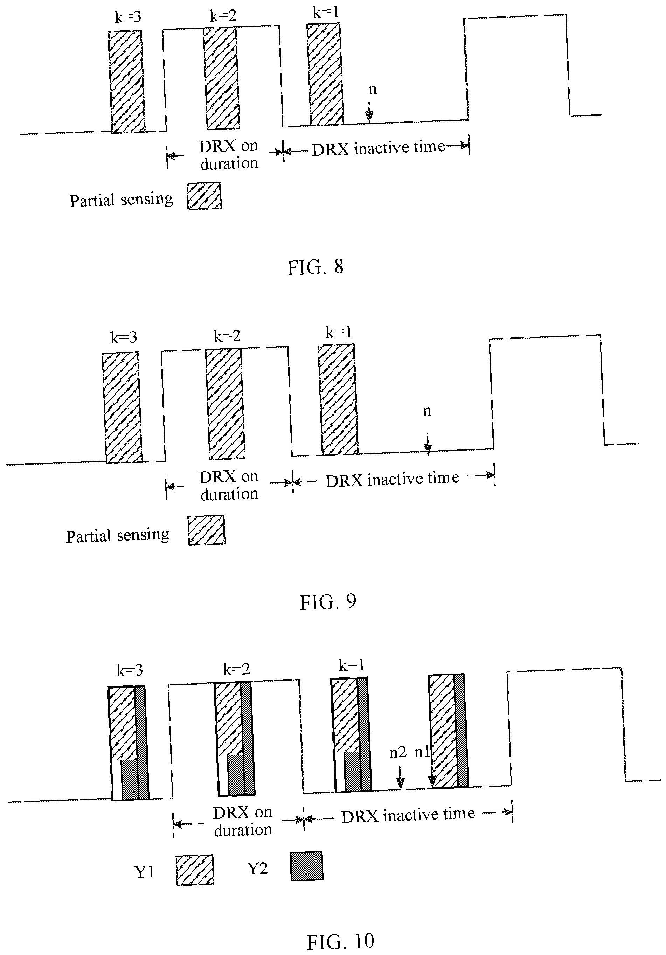

As shown in FIG. 8, when the resource allocation scheme of the terminal is partial sensing (Partial sensing) and the first sensing mode (PBPS) is used, a sensing window k is limited to achieve the purpose of power saving.

As predefined by the protocol, configured by the network, preconfigured by the network, indicated by the network, configured by the terminal, preconfigured by the terminal, or indicated by the terminal, when the terminal is configured with DRX, sensing and/or measurement is performed based on parameter configuration for DRX, or configuration is interpreted in an interpretation manner for a case with DRX configured, assuming that only a sensing occasion in the inactive state is considered in this case. Therefore, when two most recent sensing occasions before the first moment are configured or indicated, for example, j=1,2 is indicated, and in this case, a sensing occasion of j=1 is actually the sensing occasion in the inactive state in FIG. 8, that is, k=1. However, j=2 corresponds to a sensing occasion of k=3; because there is another sensing occasion of on duration between this sensing occasion and that of j=1 in this case, the terminal may perform sensing and/or measurement in all the windows of k=1,2,3.

Alternatively, as predefined by the protocol, configured by the network, preconfigured by the network, indicated by the network, configured by the terminal, preconfigured by the terminal, or indicated by the terminal, when the terminal is configured with DRX, sensing and/or measurement is performed based on parameter configuration for DRX, or configuration is interpreted in an interpretation manner for a case with DRX configured, assuming that the sensing occasion is determined from the 1st sensing occasion in the inactive state in this case. Therefore, when the two most recent sensing occasion before the first moment is configured or indicated, for example, j=1,2 is indicated, and in this case, a sensing occasion of j=1 is actually the sensing occasion in the inactive state in FIG. 8, that is, k=1; and j=2 corresponds to a sensing occasion of k=2.

Implementation 3 of this application: sensing limitation 3 for partial sensing window

As shown in FIG. 9, when the resource allocation scheme of the terminal is partial sensing (Partial sensing) and the first sensing mode (PBPS) is used, the number k of sensing windows in the inactive state is limited to achieve the purpose of power saving. It is assumed that k=1,2,3 is configured in this case, that is, three most recent sensing occasions.

As shown in FIG. 9, as predefined by the protocol, configured by the network, preconfigured by the network, indicated by the network, configured by the terminal, preconfigured by the terminal, or indicated by the terminal, a value of the number k of sensing windows in the inactive state is 1, in this case, according to a rule of counting from the most recent sensing occasion, sensing may be performed in the sensing window of k=1 shown in FIG. 9, and sensing cannot be performed in a sensing window of k=3.

Implementation 4 of this application: Selection of candidate resource Y

As shown in FIG. 10, when resource selection is triggered by arrival of a first data packet of the terminal, if the terminal already has a second data packet of another process and a candidate resource Y2 is already selected, to save power as much as possible, a sensing window corresponding to the resource selection for the first data packet can be made coincide with a sensing window corresponding to the resource selection for the second data packet as much as possible during selection of a candidate resource Y1 for the first data packet. This can shorten a length of the sensing window in the inactive state or make an interval between sensing windows corresponding to the two data packets smaller, avoiding the terminal from frequently performing RF switching or from being unable to switch to a more power-saving sleep state due to frequent waking up.

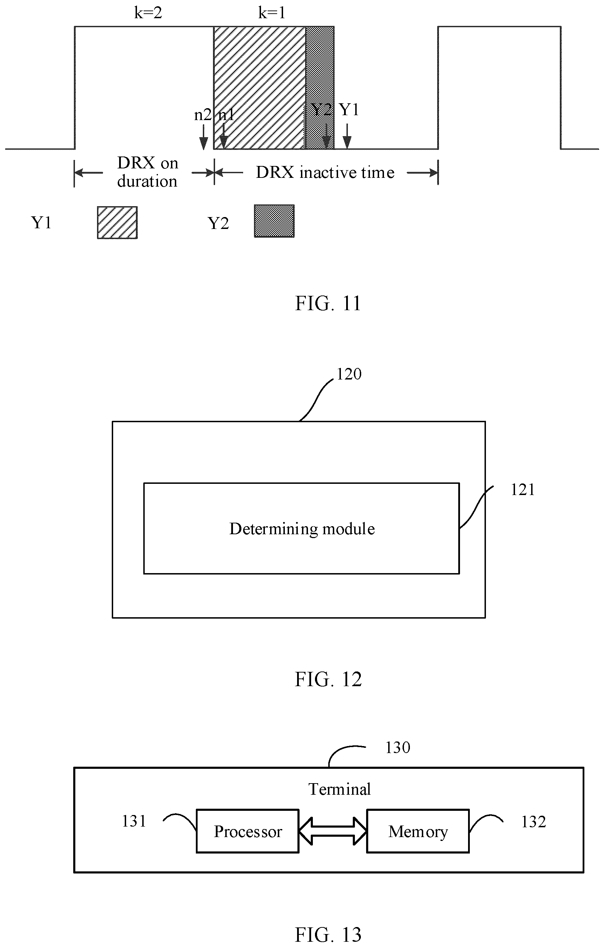

As shown in FIG. 11, if the terminal has an aperiodic service and cannot perform sensing in advance, during selection of the 1st slot in the candidate resource Y1 corresponding to the first data packet, a smaller distance may be ensured as much as possible from the 1st slot in the candidate resource Y2 for the second data packet that arrives first, so that CPS windows overlap as much as possible, thereby achieving the effect of power saving.

It should be noted that, in the discontinuous reception-based transmission method provided by the embodiments of this application, the execution body may be a discontinuous reception-based transmission apparatus, or a control module for executing the discontinuous reception-based transmission method in the discontinuous reception-based transmission apparatus. In the embodiments of this application, the discontinuous reception-based transmission apparatus provided by the embodiments of this application is described by using the discontinuous reception-based transmission method being executed by the discontinuous reception-based transmission apparatus as an example.

Referring to FIG. 12, an embodiment of this application further provides a discontinuous reception-based transmission apparatus 120, including:
a determining module 121, configured to determine a sensing and/or measurement behavior in a DRX inactive state according to a resource allocation scheme, where the resource allocation scheme includes a partial sensing mode, a full sensing mode, and/or random selection.

In this embodiment of this application, a specific sensing (sensing) or measurement behavior of the terminal in an inactive state is clarified, so that the terminal performs sensing or measurement in the DRX inactive state to achieve the purpose of power saving while guaranteeing service reliability.

Optionally, the partial sensing mode includes a first sensing mode, the first sensing mode being a periodic-based partial sensing mode; and the determining module is configured to: determine the number and/or positions of sensing occasions for the first sensing mode based on configuration information, where the configuration information includes first configuration information and/or second configuration information, the first configuration information is configuration information for the number and/or positions of sensing occasions for the first sensing mode in a case with DRX not configured, and the second configuration information is configuration information for the number and/or positions of sensing occasions for the first sensing mode in a case with DRX configured; and perform sensing and/or measurement in the DRX inactive state based on the number and/or positions of sensing occasions for the first sensing mode in a case with DRX configured.

Optionally, the determining module is configured to: determine, based on configuration information, the number and/or positions of sensing occasions in a case with DRX configured, where the configuration information includes configuration information for the number and/or positions of sensing occasions; and perform sensing and/or measurement in the DRX inactive state based on the determined number and/or positions of sensing occasions in a case with DRX configured.

Optionally, the configuration information is predefined by a protocol, configured by a network, preconfigured by the network, indicated by the network, configured by the terminal, preconfigured by the terminal, or indicated by the terminal.

Optionally, the number and/or positions of sensing occasions configured in the configuration information is the number and/or positions of sensing occasions in the DRX inactive state.

Optionally, the number and/or positions of sensing occasions configured in the configuration information is determined from the 1st sensing occasion in the DRX inactive state.

Optionally, the 1st sensing occasion is determined forward using a first moment as a reference point, the first moment is a resource selection trigger time, the P-th slot in candidate slots for resource selection, or a resource reporting time, and P is a positive integer greater than or equal to 1.

Optionally, remaining sensing occasions other than the 1st sensing occasion configured in the configuration information include a sensing occasion in a DRX active state and a sensing occasion in the DRX inactive state.

Optionally, the number and/or positions of sensing occasions configured in the configuration information are determined starting from a first moment used as a reference point, where the first moment is a resource selection trigger time, the P-th slot in candidate slots for resource selection, or a resource reporting time, P being a positive integer greater than or equal to 1.

Optionally, the number and/or positions of sensing occasions configured in the configuration information are determined forward starting from the first moment.

Optionally, the apparatus further includes:
a first processing module, configured to perform sensing and/or measurement on a second sensing occasion, where the second sensing occasion is a sensing occasion in a DRX active state and prior to the sensing occasion configured in the configuration information.

Optionally, the partial sensing mode is a first sensing mode, the first sensing mode being a periodic-based partial sensing mode; and the determining module is configured to perform at least one of the following:
performing sensing on N sensing occasions nearest to a first moment;
performing sensing on N sensing occasions nearest to the first moment in the DRX inactive state; and
performing sensing on only N sensing occasions nearest to the first moment in the DRX inactive state in each DRX cycle; where
the number of sensing occasions of the terminal, communication link, or communication group satisfies a first criterion, the first criterion being less than a first threshold and/or greater than a second threshold;
the number of sensing time units of the terminal, communication link, or communication group satisfies a second criterion, the second criterion being less than a third threshold and/or greater than a fourth threshold;
a ratio or difference between the number of sensing occasions in the DRX inactive state and the number of sensing occasions in a DRX active state for the terminal, communication link, or communication group satisfies a fifth threshold; or a ratio or difference between the number of sensing occasions in the DRX inactive state and the total number of sensing occasions in a DRX cycle satisfies a sixth threshold;
a minimum interval between every two sensing occasions is greater than or equal to a seventh threshold, and/or a maximum interval is less than or equal to an eighth threshold; and
a minimum interval between every two sensing occasions in the DRX inactive state is greater than or equal to a seventh threshold, and/or a maximum interval is less than or equal to an eighth threshold; where
N is a positive integer greater than or equal to 1.

Optionally, the first moment is a resource selection trigger time, the P-th slot in candidate slots for resource selection, or a resource reporting time, P is a positive integer greater than or equal to 1, and the number and/or positions of sensing occasions are determined forward from the first moment.

Optionally, a value of at least one of N, the first threshold, the second threshold, the third threshold, the fourth threshold, the fifth threshold, the sixth threshold, the seventh threshold, and the eighth threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

Optionally, the partial sensing mode is a second sensing mode, and when the second sensing mode is a contiguous partial sensing mode, a sensing window or sensing duration for the second sensing mode is less than or equal to a ninth threshold, or a sensing window or sensing duration for the second sensing mode in the DRX inactive state is less than or equal to a tenth threshold.

Optionally, a value of at least one of the ninth threshold and the tenth threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

Optionally, the apparatus further includes:
a configuration module, configured to configure a candidate resource set for a first data packet to be related to a candidate resource set for a second data packet, where the first data packet and the second data packet are packets of different processes, and the second data packet is a data packet of an existing process; and the configuring the candidate resource set for the first data packet includes at least one of the following:
configuring the candidate resource set for the first data packet such that a sensing window corresponding to the first data packet and a sensing window corresponding to the second data packet at least partially overlap or are spaced apart for less than a preset value; and
configuring the first L slots in the candidate resource set for the first data packet such that the sensing window corresponding to the first data packet and the sensing window corresponding to the second data packet at least partially overlap or are spaced apart for less than a preset value.

Optionally, the apparatus further includes:
a second processing module, configured to trigger or switch a resource selection or resource allocation scheme.

Optionally, the second processing module is configured to trigger or switch the resource selection or resource allocation scheme in a case that at least one of the following conditions is satisfied:
at least one of sensing and/or measurement duration, sensing and/or measurement duration in the DRX inactive state, continuous sensing and/or measurement duration, continuous sensing and/or measurement duration in the DRX inactive state, the number of measurements, and the number of times of switching from a sleep state to a wake-up state reaches a preset threshold;
at least one of a battery level, a power level, a power saving mode, a DRX cycle, a DRX on duration, a DRX inactive state duration, a transmission period of data packet, and a first measurement quantity reaches a preset threshold, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections;
a transmission type of a service received by the terminal is broadcast or groupcast; and
at least one of the number of pieces of control information received by the terminal in the DRX inactive state, the number of reserved resources, and a ratio of reserved resources is less than a preset threshold.

Optionally, a value of the preset threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

Optionally, the partial sensing mode includes a first sensing mode and a second sensing mode, the first sensing mode is periodic-based partial sensing, and the second sensing mode is contiguous partial sensing; and the determining module performs at least one of the following:
switching from the full sensing mode to the first sensing mode or from the first sensing mode to the full sensing mode;
switching from the full sensing mode to the second sensing mode or from the second sensing mode to the full sensing mode;
switching from the full sensing mode to the first sensing mode or the second sensing mode or from the first sensing mode or the second sensing mode to the full sensing mode;
switching from the first sensing mode to the second sensing mode or from the second sensing mode to the first sensing mode;
switching from the first sensing mode and the second sensing mode to the first sensing mode or to the second sensing mode;
switching from the full sensing mode to random selection or from random selection to the full sensing mode; and
switching from the first sensing mode and/or the second sensing mode to random selection or from random selection to the first sensing mode and/or the second sensing mode.

Optionally, the partial sensing mode includes a first sensing mode and a second sensing mode, the first sensing mode is periodic-based partial sensing, and the second sensing mode is contiguous partial sensing; and the determining module performs at least one of the following:
skipping sensing and/or measurement in the DRX inactive state at the time of triggering or switching the resource selection or resource allocation scheme;
performing sensing and/or measurement in the DRX inactive state at the time of triggering or switching the resource selection or resource allocation scheme;
skipping sensing and/or measurement in the DRX inactive state after the resource selection or resource allocation scheme is triggered or switched;
performing sensing and/or measurement in the DRX inactive state after the resource selection or resource allocation scheme is triggered or switched;
performing, by the terminal, sensing and/or measurement in the DRX inactive state according to the resource allocation scheme;
performing sensing and/or measurement in the DRX inactive state upon triggering or switching to a full sensing mode or coexistence of the first sensing mode and the second sensing mode;
skipping sensing and/or measurement in the DRX inactive state after triggering or switching to the first sensing mode or the second sensing mode; and
performing sensing and/or measurement in the DRX inactive state after triggering or switching to the first sensing mode or the second sensing mode.

Optionally, the partial sensing mode includes a first sensing mode, the first sensing mode being periodic-based partial sensing; and the determining module is configured to: in a case that the terminal triggers the first sensing mode, perform sensing and/or measurement within a corresponding sensing window. Further, when the first sensing mode is triggered, sensing and/or measurement can, should, or must be performed in the inactive state within the corresponding sensing window.

Optionally, the partial sensing mode includes a second sensing mode, the second sensing mode being contiguous partial sensing; and the determining module is configured to: in a case that the terminal triggers the second sensing mode, perform sensing and/or measurement within a corresponding sensing window. Further, when the second sensing mode is triggered, sensing and/or measurement can, should, or must be performed in the inactive state within the corresponding sensing window.

Optionally, the determining module is configured to: perform sensing and/or measurement in a corresponding sensing slot during re-evaluation or preemption checking. Further, during re-evaluation or preemption checking, sensing and/or measurement can, should, or must be performed in the inactive state within the corresponding sensing window.

Optionally, the partial sensing mode includes a second sensing mode, the second sensing mode being contiguous partial sensing, and the determining module is configured to: in a case that a sensing window is larger than a minimum sensing window of the second sensing mode, perform, for the terminal, sensing and/or measurement in M most recent slots within the sensing window, M being a size of the minimum sensing window in the second sensing mode, or M is equal to a first preset time minus a processing time, the processing time being an SCI processing time and/or a data packet preparation time; where
the minimum sensing window is predefined by a protocol, configured by a network, preconfigured by the network, indicated by the network, configured by the terminal, preconfigured by the terminal, or indicated by the terminal.

Optionally, the determining module is configured to: in a case that a minimum sensing window or a minimum candidate slot is indicated as predefined by a protocol, configured by a network, preconfigured by the network, indicated by the network, configured by the terminal, preconfigured by the terminal, or indicated by the terminal, perform sensing and/or measurement in a corresponding sensing slot, where the sensing slot includes a sensing slot corresponding to a sensing mode triggered by a current packet and/or a sensing slot corresponding to a sensing mode triggered by an existing data packet. Further, sensing and/or measurement can, should, or must be performed in the inactive state in the corresponding sensing slot.

The discontinuous reception-based transmission apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The discontinuous reception-based transmission apparatus provided in this embodiment of this application can implement the processes implemented in the method embodiment in FIG. 6, with the same technical effects achieved. To avoid repetition, details are not described herein again.

As shown in FIG. 13, an embodiment of this application further provides a terminal 130, including a processor 131, a memory 132, and a program or instructions stored in the memory 132 and capable of running on the processor 131. When the program or the instructions are executed by the processor 131, the processes of the foregoing embodiments of the discontinuous reception-based transmission method are implemented, with the same technical effects achieved. To avoid repetition, details are not described herein again.

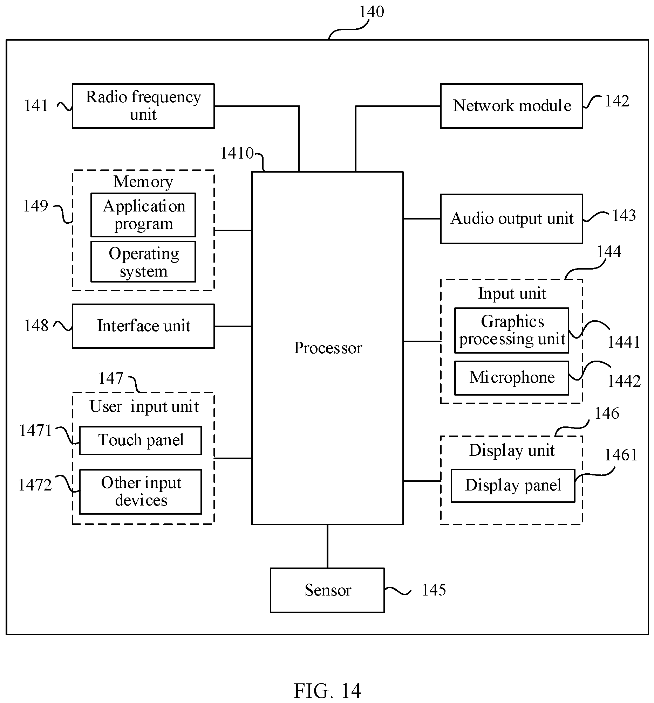

An embodiment of this application further provides a terminal, including a processor and a communication interface, where the processor is configured to determine a sensing and/or measurement behavior in a DRX inactive state according to a resource allocation scheme, where the resource allocation scheme includes a partial sensing mode, a full sensing mode, and/or random selection. The terminal embodiments correspond to the foregoing terminal-side method embodiments, and the implementation processes and implementations of the foregoing method embodiments can be applied to the terminal embodiments, with the same technical effects achieved. Specifically, FIG. 14 is a schematic diagram of a hardware structure of a terminal for implementing the embodiments of this application.

The terminal 140 includes but is not limited to at least part of components such as a radio frequency unit 141, a network module 142, an audio output unit 143, an input unit 144, a sensor 145, a display unit 146, a user input unit 147, an interface unit 148, a memory 149, and a processor 1410.

Persons skilled in the art can understand that the terminal 140 may further include a power supply (for example, a battery) supplying power to the components, and the power supply may be logically connected to the processor 1410 through a power management system. In this way, functions such as charge management, discharge management, and power consumption management are implemented by using the power management system. The structure of the terminal shown in FIG. 14 does not constitute any limitation on the terminal. The terminal may include more or fewer components than shown in the figure, or a combination of some components, or the components disposed differently. Details are not described herein again.

It can be understood that in this embodiment of this application, the input unit 144 may include a graphics processing unit (Graphics Processing Unit, GPU) 1441 and a microphone 1442. The graphics processing unit 1441 processes image data of a still picture or video obtained by an image capture apparatus (such as a camera) in a video capture mode or an image capture mode. The display unit 146 may include a display panel 1461, and the display panel 1461 may be configured in a form of a liquid crystal display, an organic light-emitting diode, and the like. The user input unit 147 may include a touch panel 1471 and other input devices 1472. The touch panel 1471 is also referred to as a touchscreen. The touch panel 1471 may include two parts: a touch detection apparatus and a touch controller. The other input devices 1472 may include but are not limited to a physical keyboard, a function key (such as a volume control key or a power on/off key), a trackball, a mouse, a joystick, and the like. Details are not described herein.

In this embodiment of this application, the radio frequency unit 141 receives downlink data from a network-side device, and then sends the downlink data to the processor 1410 for processing; and also sends uplink data to the network-side device. Generally, the radio frequency unit 141 includes but is not limited to an antenna, at least one amplifier, a transceiver, a coupler, a low noise amplifier, a duplexer, and the like.

The memory 149 may be configured to store software programs or instructions and various data. The memory 149 may include a program or instruction storage area and a data storage area. The program or instruction storage area may store an operating system, an application program or instruction required by at least one function (for example, a sound playback function or an image playback function), and the like. In addition, the memory 149 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 1410 may include one or more processing units. Optionally, an application processor and a modem processor may be integrated in the processor 1410. The application processor primarily processes an operating system, user interfaces, application programs or instructions, and the like. The modem processor primarily processes radio communication, for example, being a baseband processor. It can be understood that the modem processor may alternatively be not integrated in the processor 1410.

The processor 1410 is configured to determine a sensing and/or measurement behavior in a DRX inactive state according to a resource allocation scheme, where the resource allocation scheme includes a partial sensing mode, a full sensing mode, and/or random selection.

In this embodiment of this application, a specific sensing (sensing) or measurement behavior of the terminal in an inactive state is clarified, so that the terminal performs sensing or measurement in the DRX inactive state to achieve the purpose of power saving while guaranteeing service reliability.

Optionally, the partial sensing mode includes a first sensing mode, the first sensing mode being a periodic-based partial sensing mode; and the processor 1410 is configured to: determine the number and/or positions of sensing occasions for the first sensing mode based on configuration information, where the configuration information includes first configuration information and/or second configuration information, the first configuration information is configuration information for the number and/or positions of sensing occasions for the first sensing mode in a case with DRX not configured, and the second configuration information is configuration information for the number and/or positions of sensing occasions for the first sensing mode in a case with DRX configured; and perform sensing and/or measurement in the DRX inactive state based on the number and/or positions of sensing occasions for the first sensing mode in a case with DRX configured.

Optionally, the processor 1410 is configured to: determine, based on configuration information, the number and/or positions of sensing occasions in a case with DRX configured, where the configuration information includes configuration information for the number and/or positions of sensing occasions; and perform sensing and/or measurement in the DRX inactive state based on the determined number and/or positions of sensing occasions in a case with DRX configured.

Optionally, the configuration information is predefined by a protocol, configured by a network, preconfigured by the network, indicated by the network, configured by the terminal, preconfigured by the terminal, or indicated by the terminal.

Optionally, the number and/or positions of sensing occasions configured in the configuration information is the number and/or positions of sensing occasions in the DRX inactive state.

Optionally, the number and/or positions of sensing occasions configured in the configuration information is determined from the 1st sensing occasion in the DRX inactive state.

Optionally, the 1st sensing occasion is determined forward using a first moment as a reference point, the first moment is a resource selection trigger time, the P-th slot in candidate slots for resource selection, or a resource reporting time, and P is a positive integer greater than or equal to 1.

Optionally, remaining sensing occasions other than the 1st sensing occasion configured in the configuration information include a sensing occasion in a DRX active state and a sensing occasion in the DRX inactive state.

Optionally, the number and/or positions of sensing occasions configured in the configuration information are determined starting from a first moment used as a reference point, where the first moment is a resource selection trigger time, the P-th slot in candidate slots for resource selection, or a resource reporting time, P being a positive integer greater than or equal to 1.

Optionally, the number and/or positions of sensing occasions configured in the configuration information are determined forward starting from the first moment.

Optionally, the processor 1410 is configured to perform sensing and/or measurement on a second sensing occasion, where the second sensing occasion is a sensing occasion in a DRX active state and prior to the sensing occasion configured in the configuration information.

Optionally, the partial sensing mode is a first sensing mode, the first sensing mode being a periodic-based partial sensing mode; and the processor 1410 is configured to perform at least one of the following:
performing sensing on N sensing occasions nearest to a first moment;
performing sensing on N sensing occasions nearest to the first moment in the DRX inactive state; and
performing sensing on only N sensing occasions nearest to the first moment in the DRX inactive state in each DRX cycle; where
the number of sensing occasions of the terminal, communication link, or communication group satisfies a first criterion, the first criterion being less than a first threshold and/or greater than a second threshold;
the number of sensing time units of the terminal, communication link, or communication group satisfies a second criterion, the second criterion being less than a third threshold and/or greater than a fourth threshold;
a ratio or difference between the number of sensing occasions in the DRX inactive state and the number of sensing occasions in a DRX active state for the terminal, communication link, or communication group satisfies a fifth threshold; or a ratio or difference between the number of sensing occasions in the DRX inactive state and the total number of sensing occasions in a DRX cycle satisfies a sixth threshold;
a minimum interval between every two sensing occasions is greater than or equal to a seventh threshold, and/or a maximum interval is less than or equal to an eighth threshold; and
a minimum interval between every two sensing occasions in the DRX inactive state is greater than or equal to a seventh threshold, and/or a maximum interval is less than or equal to an eighth threshold; where
N is a positive integer greater than or equal to 1.

Optionally, the first moment is a resource selection trigger time, the P-th slot in candidate slots for resource selection, or a resource reporting time, P is a positive integer greater than or equal to 1, and the number and/or positions of sensing occasions are determined forward from the first moment.

Optionally, a value of at least one of N, the first threshold, the second threshold, the third threshold, the fourth threshold, the fifth threshold, the sixth threshold, the seventh threshold, and the eighth threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

Optionally, the partial sensing mode is a second sensing mode, and when the second sensing mode is a contiguous partial sensing mode, a sensing window or sensing duration for the second sensing mode is less than or equal to a ninth threshold, or a sensing window or sensing duration for the second sensing mode in the DRX inactive state is less than or equal to a tenth threshold.

Optionally, a value of at least one of the ninth threshold and the tenth threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

Optionally, the processor 1410 is configured to configure a candidate resource set for a first data packet to be related to a candidate resource set for a second data packet, where the first data packet and the second data packet are packets of different processes, and the second data packet is a data packet of an existing process; and the configuring the candidate resource set for the first data packet includes at least one of the following:
configuring the candidate resource set for the first data packet such that a sensing window corresponding to the first data packet and a sensing window corresponding to the second data packet at least partially overlap or are spaced apart for less than a preset value; and
configuring the first L slots in the candidate resource set for the first data packet such that the sensing window corresponding to the first data packet and the sensing window corresponding to the second data packet at least partially overlap or are spaced apart for less than a preset value.

Optionally, the processor 1410 is configured to trigger or switch a resource selection or resource allocation scheme.

Optionally, the resource selection or resource allocation scheme is triggered or switched in a case that at least one of the following conditions is satisfied:
at least one of sensing and/or measurement duration, sensing and/or measurement duration in the DRX inactive state, continuous sensing and/or measurement duration, continuous sensing and/or measurement duration in the DRX inactive state, the number of measurements, and the number of times of switching from a sleep state to a wake-up state reaches a preset threshold;
at least one of a battery level, a power level, a power saving mode, a DRX cycle, a DRX on duration, a DRX inactive state duration, a transmission period of data packet, and a first measurement quantity reaches a preset threshold, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections;
a transmission type of a service received by the terminal is broadcast or groupcast; and
at least one of the number of pieces of control information received by the terminal in the DRX inactive state, the number of reserved resources, and a ratio of reserved resources is less than a preset threshold.

Optionally, a value of the preset threshold is related to at least one of the following parameters: power saving mode, resource allocation scheme, DRX cycle, DRX on duration, DRX inactive state duration, transmission period of data packet, battery power level, priority of data or service, and first measurement quantity, where the first measurement quantity includes at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

Optionally, the partial sensing mode includes a first sensing mode and a second sensing mode, the first sensing mode is periodic-based partial sensing, and the second sensing mode is contiguous partial sensing; and the triggering or switching a resource selection or resource allocation scheme includes at least one of the following:
switching from the full sensing mode to the first sensing mode or from the first sensing mode to the full sensing mode;
switching from the full sensing mode to the second sensing mode or from the second sensing mode to the full sensing mode;
switching from the full sensing mode to the first sensing mode or the second sensing mode or from the first sensing mode or the second sensing mode to the full sensing mode;
switching from the first sensing mode to the second sensing mode or from the second sensing mode to the first sensing mode;
switching from the first sensing mode and the second sensing mode to the first sensing mode or to the second sensing mode;
switching from the full sensing mode to random selection or from random selection to the full sensing mode; and
switching from the first sensing mode and/or the second sensing mode to random selection or from random selection to the first sensing mode and/or the second sensing mode.

Optionally, the partial sensing mode includes a first sensing mode and a second sensing mode, the first sensing mode is periodic-based partial sensing, and the second sensing mode is contiguous partial sensing; and the processor 1410 is configured to perform at least one of the following:
skipping sensing and/or measurement in the DRX inactive state at the time of triggering or switching the resource selection or resource allocation scheme;
performing sensing and/or measurement in the DRX inactive state at the time of triggering or switching the resource selection or resource allocation scheme;
skipping sensing and/or measurement in the DRX inactive state after the resource selection or resource allocation scheme is triggered or switched;
performing sensing and/or measurement in the DRX inactive state after the resource selection or resource allocation scheme is triggered or switched;
performing, by the terminal, sensing and/or measurement in the DRX inactive state according to the resource allocation scheme;
performing sensing and/or measurement in the DRX inactive state upon triggering or switching to a full sensing mode or coexistence of the first sensing mode and the second sensing mode;
skipping sensing and/or measurement in the DRX inactive state after triggering or switching to the first sensing mode or the second sensing mode; and
performing sensing and/or measurement in the DRX inactive state after triggering or switching to the first sensing mode or the second sensing mode.

Optionally, the partial sensing mode includes a first sensing mode, the first sensing mode being periodic-based partial sensing; and the processor 1410 is configured to: in a case that the terminal triggers the first sensing mode, perform sensing and/or measurement within a corresponding sensing window. Further, when the first sensing mode is triggered, sensing and/or measurement can, should, or must be performed in the inactive state within the corresponding sensing window.

Optionally, the partial sensing mode includes a second sensing mode, the second sensing mode being contiguous partial sensing; and the processor 1410 is configured to: in a case that the terminal triggers the second sensing mode, perform sensing and/or measurement within a corresponding sensing window. Further, when the second sensing mode is triggered, sensing and/or measurement can, should, or must be performed in the inactive state within the corresponding sensing window.

Optionally, the processor 1410 is configured to: perform sensing and/or measurement in a corresponding sensing slot during re-evaluation or preemption checking. Further, during re-evaluation or preemption checking, sensing and/or measurement can, should, or must be performed in the inactive state within the corresponding sensing window.

Optionally, the partial sensing mode includes a second sensing mode, the second sensing mode being contiguous partial sensing, and the processor 1410 is configured to: in a case that a sensing window is larger than a minimum sensing window of the second sensing mode, perform, for the terminal, sensing and/or measurement in M most recent slots within the sensing window, M being a size of the minimum sensing window in the second sensing mode, or M is equal to a first preset time minus a processing time, the processing time being an SCI processing time and/or a data packet preparation time; where
the minimum sensing window is predefined by a protocol, configured by a network, preconfigured by the network, indicated by the network, configured by the terminal, preconfigured by the terminal, or indicated by the terminal.

Optionally, the processor 1410 is configured to: in a case that a minimum sensing window or a minimum candidate slot is indicated as predefined by a protocol, configured by a network, preconfigured by the network, indicated by the network, configured by the terminal, preconfigured by the terminal, or indicated by the terminal, perform, for the terminal, sensing and/or measurement in a corresponding sensing slot, where the sensing slot includes a sensing slot corresponding to a sensing mode triggered by a current packet and/or a sensing slot corresponding to a sensing mode triggered by an existing data packet. Further, sensing and/or measurement can, should, or must be performed in the inactive state in the corresponding sensing slot.

An embodiment of this application further provides a readable storage medium, where a program or instructions are stored in the readable storage medium. When the program or instructions are executed by a processor, the processes of the foregoing discontinuous reception-based transmission method embodiment can be implemented, with same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing discontinuous reception-based transmission method embodiments, with the same technical effects achieved. To avoid repetition, details are not repeated herein.

It should be understood that the chip mentioned in the embodiments of this application may also be referred to as a system-level chip, a system chip, a chip system, a system-on-chip, or the like.

An embodiment of this application further provides a communication device, the communication device may be an electronic device such as the terminal described above, and the communication device is configured to implement the processes of the embodiments of the discontinuous reception-based transmission method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A discontinuous reception-based transmission method, comprising:
determining, by a terminal, a sensing and/or measurement behavior in a discontinuous reception DRX inactive state according to a resource allocation scheme, wherein the resource allocation scheme comprises a partial sensing mode, a full sensing mode, and/or random selection.

2. The method according to claim 1, wherein the partial sensing mode comprises a first sensing mode, the first sensing mode being a periodic-based partial sensing mode; and the determining, by a terminal, a sensing and/or measurement behavior in a DRX inactive state according to a resource allocation scheme comprises:
determining, by the terminal, the number and/or positions of sensing occasions for the first sensing mode based on configuration information, wherein the configuration information comprises first configuration information and/or second configuration information, the first configuration information is configuration information for the number and/or positions of sensing occasions for the first sensing mode in a case with DRX not configured, and the second configuration information is configuration information for the number and/or positions of sensing occasions for the first sensing mode in a case with DRX configured; and
performing, by the terminal, sensing and/or measurement in the DRX inactive state based on the number and/or positions of sensing occasions for the first sensing mode in a case with DRX configured.

3. The method according to claim 1, wherein the determining, by a terminal, a sensing and/or measurement behavior in a DRX inactive state according to a resource allocation scheme comprises:
determining, by the terminal based on configuration information, the number and/or positions of sensing occasions in a case with DRX configured, wherein the configuration information comprises configuration information for the number and/or positions of sensing occasions; and
performing, by the terminal, sensing and/or measurement in the DRX inactive state based on the determined number and/or positions of sensing occasions in a case with DRX configured.

4. The method according to claim 2 or 3, wherein the configuration information is predefined by a protocol, configured by a network, preconfigured by the network, indicated by the network, configured by the terminal, preconfigured by the terminal, or indicated by the terminal.

5. The method according to claim 2 or 3, wherein the number and/or positions of sensing occasions configured in the configuration information is the number and/or positions of sensing occasions in the DRX inactive state.

6. The method according to claim 2 or 3, wherein the number and/or positions of sensing occasions configured in the configuration information is determined from the 1st sensing occasion in the DRX inactive state.

7. The method according to claim 6, wherein the 1st sensing occasion is determined forward using a first moment as a reference point, wherein the first moment is a resource selection trigger time, the P-th slot in candidate slots for resource selection, or a resource reporting time, P being a positive integer greater than or equal to 1.

8. The method according to claim 6, wherein remaining sensing occasions configured in the configuration information other than the 1st sensing occasion comprise a sensing occasion in a DRX active state and a sensing occasion in the DRX inactive state.

9. The method according to claim 2 or 3, wherein the number and/or positions of sensing occasions configured in the configuration information are determined starting from a first moment used as a reference point, wherein the first moment is a resource selection trigger time, the P-th slot in candidate slots for resource selection, or a resource reporting time, P being a positive integer greater than or equal to 1.

10. The method according to claim 9, wherein the number and/or positions of sensing occasions configured in the configuration information are determined forward starting from the first moment.

11. The method according to claim 2 or 3, further comprising:
performing, by the terminal, sensing and/or measurement on a second sensing occasion, wherein the second sensing occasion is a sensing occasion in a DRX active state and prior to the sensing occasion configured in the configuration information.

12. The method according to claim 1, wherein the partial sensing mode is a first sensing mode, the first sensing mode being a periodic-based partial sensing mode; and the determining, by a terminal, a sensing and/or measurement behavior in a DRX inactive state according to a resource allocation scheme comprises at least one of the following:
performing sensing on N sensing occasions nearest to a first moment;
performing sensing on N sensing occasions nearest to the first moment in the DRX inactive state; and
performing sensing on only N sensing occasions nearest to the first moment in the DRX inactive state in each DRX cycle; wherein
the number of sensing occasions of the terminal, communication link, or communication group satisfies a first criterion, the first criterion being less than a first threshold and/or greater than a second threshold;
the number of sensing time units of the terminal, communication link, or communication group satisfies a second criterion, the second criterion being less than a third threshold and/or greater than a fourth threshold;
a ratio or difference between the number of sensing occasions in the DRX inactive state and the number of sensing occasions in a DRX active state for the terminal, communication link, or communication group satisfies a fifth threshold; or a ratio or difference between the number of sensing occasions in the DRX inactive state and the total number of sensing occasions in a DRX cycle satisfies a sixth threshold;
a minimum interval between every two sensing occasions is greater than or equal to a seventh threshold, and/or a maximum interval is less than or equal to an eighth threshold; and
a minimum interval between every two sensing occasions in the DRX inactive state is greater than or equal to a seventh threshold, and/or a maximum interval is less than or equal to an eighth threshold; wherein
N is a positive integer greater than or equal to 1.

13. The method according to claim 12, wherein the first moment is a resource selection trigger time, the P-th slot in candidate slots for resource selection, or a resource reporting time, P is a positive integer greater than or equal to 1, and the number and/or positions of sensing occasions are determined forward from the first moment.

14. The method according to claim 12, wherein a value of at least one of N, the first threshold, the second threshold, the third threshold, the fourth threshold, the fifth threshold, the sixth threshold, the seventh threshold, and the eighth threshold is related to at least one of the following parameters: power saving mode, resource allocation scheme, DRX cycle, DRX on duration, DRX inactive state duration, transmission period of data packet, battery power level, priority of data or service, and first measurement quantity, wherein the first measurement quantity comprises at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

15. The method according to claim 1, wherein the partial sensing mode is a second sensing mode, and when the second sensing mode is a contiguous partial sensing mode, a sensing window or sensing duration for the second sensing mode is less than or equal to a ninth threshold, or a sensing window or sensing duration for the second sensing mode in the DRX inactive state is less than or equal to a tenth threshold.

16. The method according to claim 15, wherein a value of at least one of the ninth threshold and the tenth threshold is related to at least one of the following parameters: power saving mode, resource allocation scheme, DRX cycle, DRX on duration, DRX inactive state duration, transmission period of data packet, battery power level, priority of data or service, and first measurement quantity, wherein the first measurement quantity comprises at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

17. The method according to claim 1, further comprising:
configuring a candidate resource set for a first data packet to be related to a candidate resource set for a second data packet, wherein the first data packet and the second data packet are packets of different processes, and the second data packet is a data packet of an existing process; and the configuring the candidate resource set for the first data packet comprises at least one of the following:
configuring the candidate resource set for the first data packet such that a sensing window corresponding to the first data packet and a sensing window corresponding to the second data packet at least partially overlap or are spaced apart for less than a preset value; and
configuring the first L slots in the candidate resource set for the first data packet such that the sensing window corresponding to the first data packet and the sensing window corresponding to the second data packet at least partially overlap or are spaced apart for less than a preset value.

18. The method according to claim 1, further comprising:
triggering or switching, by the terminal, a resource selection or resource allocation scheme.

19. The method according to claim 18, wherein the terminal triggers or switches the resource selection or resource allocation scheme in a case that at least one of the following conditions is satisfied:
at least one of sensing and/or measurement duration, sensing and/or measurement duration in the DRX inactive state, continuous sensing and/or measurement duration, continuous sensing and/or measurement duration in the DRX inactive state, the number of measurements, and the number of times of switching from a sleep state to a wake-up state reaches a preset threshold;
at least one of a battery level, a power level, a power saving mode, a DRX cycle, a DRX on duration, a DRX inactive state duration, a transmission period of data packet, and a first measurement quantity reaches a preset threshold, wherein the first measurement quantity comprises at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections;
a transmission type of a service received by the terminal is broadcast or groupcast; and
at least one of the number of pieces of control information received by the terminal in the DRX inactive state, the number of reserved resources, and a ratio of reserved resources is less than a preset threshold.

20. The method according to claim 19, wherein a value of the preset threshold is related to at least one of the following parameters: power saving mode, resource allocation scheme, DRX cycle, DRX on duration, DRX inactive state duration, transmission period of data packet, battery power level, priority of data or service, and first measurement quantity, wherein the first measurement quantity comprises at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections.

21. The method according to claim 18, wherein the partial sensing mode comprises a first sensing mode and a second sensing mode, the first sensing mode is periodic-based partial sensing, and the second sensing mode is contiguous partial sensing; and the triggering or switching, by the terminal, a resource selection or resource allocation scheme comprises at least one of the following:
switching, by the terminal, from the full sensing mode to the first sensing mode or from the first sensing mode to the full sensing mode;
switching, by the terminal, from the full sensing mode to the second sensing mode or from the second sensing mode to the full sensing mode;
switching, by the terminal, from the full sensing mode to the first sensing mode or the second sensing mode or from the first sensing mode or the second sensing mode to the full sensing mode;
switching, by the terminal, from the first sensing mode to the second sensing mode or from the second sensing mode to the first sensing mode;
switching, by the terminal, from the first sensing mode and the second sensing mode to the first sensing mode or to the second sensing mode;
switching, by the terminal, from the full sensing mode to random selection or from random selection to the full sensing mode; and
switching, by the terminal, from the first sensing mode and/or the second sensing mode to random selection or from random selection to the first sensing mode and/or the second sensing mode.

22. The method according to claim 18, wherein the partial sensing mode comprises a first sensing mode and a second sensing mode, the first sensing mode is periodic-based partial sensing, and the second sensing mode is contiguous partial sensing; and the determining, by a terminal, a sensing and/or measurement behavior in a DRX inactive state according to a resource allocation scheme comprises at least one of the following:
skipping sensing and/or measurement in the DRX inactive state at the time of triggering or switching the resource selection or resource allocation scheme;
performing sensing and/or measurement in the DRX inactive state at the time of triggering or switching the resource selection or resource allocation scheme;
skipping sensing and/or measurement in the DRX inactive state after the resource selection or resource allocation scheme is triggered or switched;
performing sensing and/or measurement in the DRX inactive state after the resource selection or resource allocation scheme is triggered or switched;
performing, by the terminal, sensing and/or measurement in the DRX inactive state according to the resource allocation scheme;
performing sensing and/or measurement in the DRX inactive state upon triggering or switching to a full sensing mode or coexistence of the first sensing mode and the second sensing mode;
skipping sensing and/or measurement in the DRX inactive state after triggering or switching to the first sensing mode or the second sensing mode; and
performing sensing and/or measurement in the DRX inactive state after triggering or switching to the first sensing mode or the second sensing mode.

23. The method according to claim 18, wherein the partial sensing mode comprises a first sensing mode, the first sensing mode being periodic-based partial sensing; and the determining, by a terminal, a sensing and/or measurement behavior in a DRX inactive state according to a resource allocation scheme comprises:
in a case that the terminal triggers the first sensing mode, performing, by the terminal, sensing and/or measurement within a corresponding sensing window.

24. The method according to claim 18, wherein the partial sensing mode comprises a second sensing mode, the second sensing mode being contiguous partial sensing, and the determining, by a terminal, a sensing and/or measurement behavior in a DRX inactive state according to a resource allocation scheme comprises:
in a case that the terminal triggers the second sensing mode, performing, by the terminal, sensing and/or measurement within a corresponding sensing window.

25. The method according to claim 1, wherein the determining, by a terminal, a sensing and/or measurement behavior in a DRX inactive state according to a resource allocation scheme comprises:
performing, by the terminal, sensing and/or measurement in a corresponding sensing slot during re-evaluation or preemption checking.

26. The method according to claim 1, wherein the partial sensing mode comprises a second sensing mode, the second sensing mode being contiguous partial sensing, and the determining, by a terminal, a sensing and/or measurement behavior in a DRX inactive state according to a resource allocation scheme comprises:
in a case that a sensing window is larger than a minimum sensing window of the second sensing mode, performing, by the terminal, sensing and/or measurement in M most recent slots within the sensing window, M being a size of the minimum sensing window in the second sensing mode, or M is equal to a first preset time minus a processing time, the processing time being an SCI processing time and/or a data packet preparation time; wherein
the minimum sensing window is predefined by a protocol, configured by a network, preconfigured by the network, indicated by the network, configured by the terminal, preconfigured by the terminal, or indicated by the terminal.

27. The method according to claim 1, wherein the determining, by a terminal, a sensing and/or measurement behavior in a DRX inactive state according to a resource allocation scheme further comprises:
in a case that a minimum sensing window or a minimum candidate slot is indicated as predefined by a protocol, configured by a network, preconfigured by the network, indicated by the network, configured by the terminal, preconfigured by the terminal, or indicated by the terminal, performing, by the terminal, sensing and/or measurement in a corresponding sensing slot, wherein the sensing slot comprises a sensing slot corresponding to a sensing mode triggered by a current packet and/or a sensing slot corresponding to a sensing mode triggered by an existing data packet.

28. A discontinuous reception-based transmission apparatus, comprising:
a determining module, configured to determine a sensing and/or measurement behavior in a DRX inactive state according to a resource allocation scheme, wherein the resource allocation scheme comprises a partial sensing mode, a full sensing mode, and/or random selection.

29. The apparatus according to claim 28, wherein the partial sensing mode comprises a first sensing mode, the first sensing mode being a periodic-based partial sensing mode; and the determining module is configured to: determine the number and/or positions of sensing occasions for the first sensing mode based on configuration information, wherein the configuration information comprises first configuration information and/or second configuration information, the first configuration information is configuration information for the number and/or positions of sensing occasions for the first sensing mode in a case with DRX not configured, and the second configuration information is configuration information for the number and/or positions of sensing occasions for the first sensing mode in a case with DRX configured; and perform sensing and/or measurement in the DRX inactive state based on the number and/or positions of sensing occasions for the first sensing mode in a case with DRX configured.

30. The apparatus according to claim 28, wherein
the determining module is configured to: determine, based on configuration information, the number and/or positions of sensing occasions in a case with DRX configured, wherein the configuration information comprises configuration information for the number and/or positions of sensing occasions; and perform sensing and/or measurement in the DRX inactive state based on the determined number and/or positions of sensing occasions in a case with DRX configured.

31. The apparatus according to claim 29 or 30, wherein the number and/or positions of sensing occasions configured in the configuration information is the number and/or positions of sensing occasions in the DRX inactive state.

32. The apparatus according to claim 29 or 30, wherein the number and/or positions of sensing occasions configured in the configuration information is determined from the 1st sensing occasion in the DRX inactive state.

33. The apparatus according to claim 32, wherein the 1st sensing occasion is determined forward using a first moment as a reference point, the first moment is a resource selection trigger time, the P-th slot in candidate slots for resource selection, or a resource reporting time, and P is a positive integer greater than or equal to 1.

34. The apparatus according to claim 32, wherein remaining sensing occasions other than the 1st sensing occasion configured in the configuration information comprise a sensing occasion in a DRX active state and a sensing occasion in the DRX inactive state.

35. The apparatus according to claim 29 or 30, wherein the number and/or positions of sensing occasions configured in the configuration information are determined forward starting from a first moment used as a reference point, wherein the first moment is a resource selection trigger time, the P-th slot in candidate slots for resource selection, or a resource reporting time, P being a positive integer greater than or equal to 1.

36. The apparatus according to claim 29 or 30, further comprising:
a first processing module, configured to perform sensing and/or measurement on a second sensing occasion, wherein the second sensing occasion is a sensing occasion in a DRX active state and prior to the sensing occasion configured in the configuration information.

37. The apparatus according to claim 28, wherein the partial sensing mode is a first sensing mode, the first sensing mode being a periodic-based partial sensing mode; and the determining module is configured to perform at least one of the following:
performing sensing on N sensing occasions nearest to a first moment;
performing sensing on N sensing occasions nearest to the first moment in the DRX inactive state; and
performing sensing on only N sensing occasions nearest to the first moment in the DRX inactive state in each DRX cycle; wherein
the number of sensing occasions of the terminal, communication link, or communication group satisfies a first criterion, the first criterion being less than a first threshold and/or greater than a second threshold;
the number of sensing time units of the terminal, communication link, or communication group satisfies a second criterion, the second criterion being less than a third threshold and/or greater than a fourth threshold;
a ratio or difference between the number of sensing occasions in the DRX inactive state and the number of sensing occasions in a DRX active state for the terminal, communication link, or communication group satisfies a fifth threshold; or a ratio or difference between the number of sensing occasions in the DRX inactive state and the total number of sensing occasions in a DRX cycle satisfies a sixth threshold;
a minimum interval between every two sensing occasions is greater than or equal to a seventh threshold, and/or a maximum interval is less than or equal to an eighth threshold; and
a minimum interval between every two sensing occasions in the DRX inactive state is greater than or equal to a seventh threshold, and/or a maximum interval is less than or equal to an eighth threshold; wherein
N is a positive integer greater than or equal to 1.

38. The apparatus according to claim 37, wherein the first moment is a resource selection trigger time, the P-th slot in candidate slots for resource selection, or a resource reporting time, P is a positive integer greater than or equal to 1, and the number and/or positions of sensing occasions are determined forward from the first moment.

39. The apparatus according to claim 28, wherein the partial sensing mode is a second sensing mode, and when the second sensing mode is a contiguous partial sensing mode, a sensing window or sensing duration for the second sensing mode is less than or equal to a ninth threshold, or a sensing window or sensing duration for the second sensing mode in the DRX inactive state is less than or equal to a tenth threshold.

40. The apparatus according to claim 28, further comprising:
a configuration module, configured to configure a candidate resource set for a first data packet to be related to a candidate resource set for a second data packet, wherein the first data packet and the second data packet are packets of different processes, and the second data packet is a data packet of an existing process; and the configuring the candidate resource set for the first data packet comprises at least one of the following:
configuring the candidate resource set for the first data packet such that a sensing window corresponding to the first data packet and a sensing window corresponding to the second data packet at least partially overlap or are spaced apart for less than a preset value; and
configuring the first L slots in the candidate resource set for the first data packet such that the sensing window corresponding to the first data packet and the sensing window corresponding to the second data packet at least partially overlap or are spaced apart for less than a preset value.

41. The apparatus according to claim 28, further comprising:
a second processing module, configured to trigger or switch a resource selection or resource allocation scheme.

42. The apparatus according to claim 41, wherein the resource selection or resource allocation scheme is triggered or switched in a case that at least one of the following conditions is satisfied:
at least one of sensing and/or measurement duration, sensing and/or measurement duration in the DRX inactive state, continuous sensing and/or measurement duration, continuous sensing and/or measurement duration in the DRX inactive state, the number of measurements, and the number of times of switching from a sleep state to a wake-up state reaches a preset threshold;
at least one of a battery level, a power level, a power saving mode, a DRX cycle, a DRX on duration, a DRX inactive state duration, a transmission period of data packet, and a first measurement quantity reaches a preset threshold, wherein the first measurement quantity comprises at least one of the following: QoS of a system, carrier, BWP, resource pool, user, or connection group, channel occupancy ratio, channel usage, channel busy ratio, channel blocking ratio, channel blocking amount, channel idle ratio, channel idle amount, the number of ACKs, the number of successful data packet transmissions, success rate of data packet transmission, the number of NACKs, the number of failed data packet transmissions, failure rate of data packet transmissions, the number of discontinuous transmissions DTXs, the number of missing detections, and the number of false detections;
a transmission type of a service received is broadcast or groupcast; and
at least one of the number of pieces of control information received in the DRX inactive state, the number of reserved resources, and a ratio of reserved resources is less than a preset threshold.

43. The apparatus according to claim 41, wherein the partial sensing mode comprises a first sensing mode and a second sensing mode, the first sensing mode is periodic-based partial sensing, and the second sensing mode is contiguous partial sensing; and the determining module performs at least one of the following:
switching from the full sensing mode to the first sensing mode or from the first sensing mode to the full sensing mode;
switching from the full sensing mode to the second sensing mode or from the second sensing mode to the full sensing mode;
switching from the full sensing mode to the first sensing mode or the second sensing mode or from the first sensing mode or the second sensing mode to the full sensing mode;
switching from the first sensing mode to the second sensing mode or from the second sensing mode to the first sensing mode;
switching from the first sensing mode and the second sensing mode to the first sensing mode or to the second sensing mode;
switching from the full sensing mode to random selection or from random selection to the full sensing mode; and
switching from the first sensing mode and/or the second sensing mode to random selection or from random selection to the first sensing mode and/or the second sensing mode.

44. The apparatus according to claim 41, wherein the partial sensing mode comprises a first sensing mode and a second sensing mode, the first sensing mode is periodic-based partial sensing, and the second sensing mode is contiguous partial sensing; and the determining module performs at least one of the following:
skipping sensing and/or measurement in the DRX inactive state at the time of triggering or switching the resource selection or resource allocation scheme;
performing sensing and/or measurement in the DRX inactive state at the time of triggering or switching the resource selection or resource allocation scheme;
skipping sensing and/or measurement in the DRX inactive state after the resource selection or resource allocation scheme is triggered or switched;
performing sensing and/or measurement in the DRX inactive state after the resource selection or resource allocation scheme is triggered or switched;
performing, by the terminal, sensing and/or measurement in the DRX inactive state according to the resource allocation scheme;
performing sensing and/or measurement in the DRX inactive state upon triggering or switching to a full sensing mode or coexistence of the first sensing mode and the second sensing mode;
skipping sensing and/or measurement in the DRX inactive state after triggering or switching to the first sensing mode or the second sensing mode; and
performing sensing and/or measurement in the DRX inactive state after triggering or switching to the first sensing mode or the second sensing mode.

45. The method according to claim 41, wherein the partial sensing mode comprises a first sensing mode, the first sensing mode being periodic-based partial sensing; and the determining module is configured to: in a case that the terminal triggers the first sensing mode, perform sensing and/or measurement within a corresponding sensing window.

46. The apparatus according to claim 41, wherein the partial sensing mode comprises a second sensing mode, the second sensing mode being contiguous partial sensing; and the determining module is configured to: in a case that the terminal triggers the second sensing mode, perform sensing and/or measurement within a corresponding sensing window.

47. The apparatus according to claim 28, wherein the determining module is configured to: perform sensing and/or measurement in a corresponding sensing slot during re-evaluation or preemption checking.

48. The apparatus according to claim 28, wherein the partial sensing mode comprises a second sensing mode, the second sensing mode being contiguous partial sensing, and the determining module is configured to: in a case that a sensing window is larger than a minimum sensing window of the second sensing mode, perform sensing and/or measurement in M most recent slots within the sensing window, M being a size of the minimum sensing window in the second sensing mode, or M is equal to a first preset time minus a processing time, the processing time being an SCI processing time and/or a data packet preparation time; wherein
the minimum sensing window is predefined by a protocol, configured by a network, preconfigured by the network, indicated by the network, configured by the terminal, preconfigured by the terminal, or indicated by the terminal.

49. The apparatus according to claim 28, wherein the determining module is configured to: in a case that a minimum sensing window or a minimum candidate slot is indicated as predefined by a protocol, configured by a network, preconfigured by the network, indicated by the network, configured by the terminal, preconfigured by the terminal, or indicated by the terminal, perform sensing and/or measurement in a corresponding sensing slot, wherein the sensing slot comprises a sensing slot corresponding to a sensing mode triggered by a current packet and/or a sensing slot corresponding to a sensing mode triggered by an existing data packet.

50. A terminal, comprising a processor, a memory, and a program or instructions stored in the memory and capable of running on the processor, wherein when the program or the instructions are executed by the processor, the steps of the discontinuous reception-based transmission method according to any one of claims 1 to 27 are implemented.

51. A readable storage medium, wherein the readable storage medium stores a program or instructions, and when the program or instructions are executed by a processor, the steps of the discontinuous reception-based transmission method according to any one of claims 1 to 27 are implemented.

52. A chip, comprising a processor and a communication interface, wherein the communication interface is coupled to the processor, and the processor is configured to execute a program or instructions to implement the steps of the discontinuous reception-based transmission method according to any one of claims 1 to 27.

53. A computer program product, wherein the computer program product is executed by at least one processor to implement the steps of the discontinuous reception-based transmission method according to any one of claims 1 to 27.

54. A communication device, configured to implement the steps of the discontinuous reception-based transmission method according to any one of claims 1 to 27.
